# EUROPEAN PATENT APPLICATION

(11) **EP 4 836 154 A1**
(43) Date of publication of application: **04.11.2026**
(21) Application number: 24916551.5
(22) Date of filing: 08.11.2024
(51) Int. Cl.: H01M 50/367

(54) **BATTERY CELL, BATTERY, AND ELECTRICAL DEVICE**

(30) Priority: 10.01.2024 CN 202410039681
(71) Applicant: Contemporary Amperex Technology Co., Limited, Ningde, Fujian 352100 (CN)
(72) Inventor: JIN, Kun, Ningde, Fujian 352100 (CN); LI, Zhen, Ningde, Fujian 352100 (CN)
(74) Representative: Kraus & Lederer PartGmbB
(86) International application number: PCT/CN2024/131029
(87) International publication number: WO 2025/148501

(57) **Abstract**

A battery cell (12), a battery (100), and an electrical device. The battery cell (12) comprises a casing (121), pressure relief mechanisms (123), and an electrode assembly (122). The casing (121) has a first end wall (1211) and a side wall (1212), and the side wall (1212) surrounds the first end wall (1211); the first end wall (1211) comprises a body (12111) and protruding portions (12112), and the protruding portions (12112) protrude from the inner surface of the body (12111); the pressure relief mechanisms (123) are arranged on the body (12111); the electrode assembly (122) is accommodated in the casing (121); the electrode assembly (122) comprises a main body (1221) and a first tab (1222), and the first tab (1222) is arranged on one end of the main body (1221); a first gap (124) is formed between the outer peripheral surface of the main body (1221) and the inner surface of the side wall (1212); the first current collector (125) is located between the first end wall (1211) and the electrode assembly (122), the protruding portions (12112) are connected to the first current collector (125), a second gap (126) is formed between the body (12111) and the first current collector (125) in the thickness direction of the first end wall (1211), and the first gap (124) is in communication with the second gap (126). The pressure relief mechanisms (123) can maintain an unobstructed connection with the first gap (124), such that when the battery cell (12) undergoes thermal runaway, the gas inside the battery cell (12) can promptly reach the pressure relief mechanisms (123) and be discharged, thereby improving the reliability of the battery cell (12).

## Description

### CROSS-REFERENCE TO RELATED APPLICATIONS

This application claims priority to Chinese Patent Application No. 202410039681.6, filed on January 10, 2024 and entitled "BATTERY CELL, BATTERY, AND ELECTRIC DEVICE, which is incorporated herein by reference in its entirety.

### TECHNICAL FIELD

This application relates to the field of battery technologies, and specifically, to a battery cell, a battery, and an electric device.

### BACKGROUND

Energy conservation and emission reduction are crucial to the sustainable development of the automobile industry. Electric vehicles, with their advantages in energy conservation and environmental protection, have become an important part of the sustainable development of the automobile industry. For electric vehicles, battery technology is an important factor in connection with their development.

How the reliability of battery cells is improved is an urgent problem that needs to be solved in battery technology.

### SUMMARY

In view of the foregoing problem, this application provides a battery cell, a battery, and an electric device, so as to improve the reliability of the battery cell.

According to a first aspect, this application provides a battery cell. The battery cell includes a housing, a pressure relief mechanism, and an electrode assembly. The housing has a first end wall and a side wall. The side wall surrounds the first end wall. The first end wall includes a body and a protruding portion, and the protruding portion protrudes from an inner surface of the body. The pressure relief mechanism is disposed on the body. The electrode assembly is accommodated in the housing. The electrode assembly includes a main body and a first tab, and the first tab is disposed on an end of the main body. A first gap is formed between an outer peripheral surface of the main body and an inner surface of the side wall. A first current collector is located between the first end wall and the electrode assembly. The protruding portion is connected to the first current collector, and a second gap is formed between the body and the first current collector in a thickness direction of the first end wall. The first gap is in communication with the second gap.

In the technical solution of the embodiments of this application, with the protruding portion provided on the first end wall, the second gap in communication with the first gap is formed between the body of the first end wall and the first current collector. With the pressure relief mechanism provided on the body, the pressure relief mechanism can maintain unobstructed communication with the first gap, so that gas inside the battery cell can promptly reach the pressure relief mechanism and be discharged from the pressure relief mechanism during thermal runaway of the battery cell, thereby improving the reliability of the battery cell.

In one or more embodiments of the first aspect, a recess is formed at a position on an outer surface of the first end wall corresponding to the protruding portion.

In the foregoing solution, the provision of the recess corresponding to the protruding portion substantially does not increase the overall weight of the first end wall, helping the battery cell have a high mass energy density. When the protruding portion is connected to the first current collector by welding, the provision of the recess can prevent the weld mark formed by welding from exceeding the outer surface of the first end wall, and thus reduces the height of the battery cell in the thickness direction of the first end wall, increasing the energy density of the battery cell.

In one or more embodiments of the first aspect, in the thickness direction of the first end wall, a projection of the pressure relief mechanism does not overlap a projection of the protruding portion.

In the foregoing solution, since the projection of the pressure relief mechanism does not overlap the projection of the protruding portion, the pressure relief mechanism is not blocked by the protruding portion, thereby improving the smoothness of venting.

In one or more embodiments of the first aspect, the protruding portion is provided in plurality, and the plurality of protruding portions are spaced apart in a circumferential direction of the first end wall.

In the foregoing solution, the provision of the plurality of protruding portions spaced apart in the circumferential direction of the first end wall can improve the connection stability between the first end wall and the first current collector.

In one or more embodiments of the first aspect, the pressure relief mechanism is provided in plurality, and the pressure relief mechanism is provided between every two adjacent protruding portions.

In the foregoing solution, the pressure relief mechanism is provided in plurality, which is conducive to increasing the pressure relief area of the battery cell. After the pressure relief mechanisms open, since the pressure relief mechanism is provided between two adjacent protruding portions, most of the opening region of each pressure relief mechanism is in communication with the second gap, further improving the pressure relief efficiency of the battery cell.

In one or more embodiments of the first aspect, the electrode assembly has a winding center hole, where the first end wall has a central region corresponding to the winding center hole, the pressure relief mechanism is provided in plurality, and the plurality of pressure relief mechanisms are spaced apart around the central region.

In the foregoing solution, the plurality of pressure relief mechanisms being spaced apart around the central region means that the pressure relief mechanisms are close to a region of the electrode assembly where gas generated is concentrated, so that the gas can promptly reach the pressure relief mechanisms and be discharged from the pressure relief mechanisms during thermal runaway of the battery cell, thereby improving the reliability of the battery cell.

In one or more embodiments of the first aspect, the plurality of pressure relief mechanisms are distributed in an annular array around a center of the first end wall.

In the foregoing solution, the plurality of pressure relief mechanisms being distributed in an annular array around the center of the first end wall means that the plurality of pressure relief mechanisms have roughly equal difficulty in opening, so that the plurality of pressure relief mechanisms can all promptly open, further improving the pressure relief efficiency of the battery cell.

In one or more embodiments of the first aspect, in a direction leaving a center of the first end wall, a width of the protruding portion in a circumferential direction of the first end wall gradually increases.

In the foregoing solution, the width of the protruding portion in the circumferential direction of the first end wall gradually increasing can enable the battery cell to have high structural stability.

In one or more embodiments of the first aspect, the first current collector is provided with a first through hole running through in a thickness direction of the first current collector, the first through hole being in communication with the second gap.

In the foregoing solution, the first current collector is provided with the first through hole in communication with the second gap, so that during thermal runaway of the battery cell, part of emissions can directly pass through the first through hole and flow into the second gap, and then flow to the pressure relief mechanism more quickly, which can improve the pressure relief efficiency of the battery cell. In addition, the provision of the first through hole is conducive to improving the infiltration performance of the electrode assembly.

In one or more embodiments of the first aspect, the electrode assembly has a winding center hole, and a position of the first current collector corresponding to the winding center hole is provided with a second through hole, where the first through hole is provided in plurality, and the plurality of first through holes are spaced apart around the second through hole.

In the foregoing solution, the provision of the plurality of first through holes can further improve the pressure relief efficiency of the battery cell during thermal runaway of the battery cell, and can also further improve the infiltration performance of the electrode assembly.

In one or more embodiments of the first aspect, the battery cell further includes a second current collector, where the second current collector is located between the first current collector and the electrode assembly, the first current collector is connected to the first end wall, the second current collector is connected to the first tab, and the first current collector is connected to the second current collector. The first current collector and the first end wall are made of a same material, and the second current collector and the first tab are made of a same material.

In the foregoing solution, after the first current collector and the first end wall made of the same material are connected, their connection position has a low probability of defects, and the battery cell has high sealing performance. After the second current collector and the first tab made of the same material are connected, their connection position has a low probability of defects, and the current flow is stable.

In one or more embodiments of the first aspect, the first current collector is connected to the first end wall to form a first connecting portion, the second current collector is connected to the first tab to form a second connecting portion, and the first current collector is connected to the second current collector to form a third connecting portion. In the thickness direction of the first end wall, a projection of the first connecting portion, a projection of the second connecting portion, and a projection of the third connecting portion do not overlap each other.

In the foregoing solution, since the projections of the first connecting portion, the second connecting portion, and the third connecting portion do not overlap each other, when different connecting portions are formed, different connecting portions in the battery cell have a low probability of mutual influence, and the battery cell has high reliability.

In one or more embodiments of the first aspect, the first current collector is provided with a first through hole running through in a thickness direction of the first current collector, and the second current collector is provided with a third through hole running through in a thickness direction of the second current collector, both the first through hole and the third through hole being in communication with the second gap.

In the foregoing solution, the first current collector is provided with the first through hole in communication with the second gap, and the second current collector is provided with the third through hole in communication with the second gap, so that during thermal runaway of the battery cell, part of emissions can directly pass through the third through hole and the first through hole and flow into the second gap, and then flow to the pressure relief mechanism more quickly, which can improve the pressure relief efficiency of the battery cell. In addition, the provision of the third through hole is conducive to improving the infiltration performance of the electrode assembly.

In one or more embodiments of the first aspect, the electrode assembly has a winding center hole, a position of the first current collector corresponding to the winding center hole is provided with a second through hole, and a position of the second current collector corresponding to the winding center hole is provided with a fourth through hole. The first through hole is provided in plurality, and the plurality of first through holes are spaced apart around the second through hole. The third through hole is provided in plurality, and the plurality of third through holes are spaced apart around the fourth through hole.

In the foregoing solution, the provision of the plurality of third through holes can further improve the pressure relief efficiency of the battery cell during thermal runaway of the battery cell, and can also further improve the infiltration performance of the electrode assembly.

In one or more embodiments of the first aspect, the housing includes an end cover and a shell, where the shell has an opening, the end cover closes the opening, the shell includes a bottom wall and a side wall, the side wall surrounds the bottom wall, and the side wall connects the bottom wall and the end cover. The end cover is the first end wall.

In the foregoing solution, setting the end cover as the first end wall can reduce the processing difficulty of the protruding portion.

In one or more embodiments of the first aspect, in a radial direction of the first end wall, the protruding portion abuts against the inner surface of the side wall.

In the foregoing solution, since the protruding portion abuts against the inner surface of the side wall, the protruding portion can facilitate the positioning of the end cover in the radial direction during assembly of the battery cell, thereby reducing the assembly difficulty and improving the assembly efficiency.

In one or more embodiments of the first aspect, the protruding portion has a first side surface abutting against the inner surface of the side wall and a second side surface facing toward the first current collector, the first side surface and the second side surface being connected through a rounded transition.

In the foregoing solution, the first side surface and the second side surface being connected through a rounded transition can enable the protruding portion to enter the shell more easily, reducing the assembly difficulty between the end cover and the shell, and can also reduce the risk of the protruding portion scratching the inner surface of the shell during assembly of the end cover, thereby reducing the probability of sealing failure between the end cover and the shell.

In one or more embodiments of the first aspect, the electrode assembly further includes a second tab, where the first tab and the second tab are disposed on two opposite ends of the main body respectively. The battery cell further includes a third current collector and an electrode terminal, where the electrode terminal is disposed on the bottom wall, the third current collector is located between the electrode assembly and the bottom wall, and the third current collector connects the second tab and the electrode terminal.

In the foregoing solution, the third current collector connecting the second tab and the electrode terminal can reduce the difficulty of electrical connection between the second tab and the electrode terminal, so that the battery cell has stable current flow capacity. In addition, the electrode terminal and the end cover being disposed on two opposite ends of the main body respectively can reduce the risk of mutual restriction of the positions of the pressure relief mechanism and the electrode terminal, which is conducive to arranging larger or more pressure relief mechanisms, thereby improving the pressure relief efficiency.

In one or more embodiments of the first aspect, the electrode assembly has a winding center hole, and the electrode terminal is provided with an electrolyte injection hole, the electrolyte injection hole corresponding to the winding center hole.

In the foregoing solution, the electrolyte injection hole corresponding to the winding center hole can facilitate the positioning of an electrolyte injection device, improving the electrolyte injection efficiency, and can also improve the uniformity of electrolyte injection and reduce the risk of damages to the electrode assembly caused by the impact of the electrolyte injected into the battery cell on the electrode assembly during electrolyte injection, helping to achieve full infiltration into the electrode assembly.

According to a second aspect, this application provides a battery, which includes the battery cell in the foregoing embodiments.

In the foregoing solutions, since the battery cell in the foregoing one or more embodiments has high reliability, the battery including the battery cell in the foregoing one or more embodiments also has high reliability.

According to a third aspect, this application provides an electric device. The electric device includes the battery cell in the foregoing embodiments, where the battery cell is configured to provide electric energy; or the electric device includes the battery in the foregoing embodiments, where the battery is configured to provide electric energy.

In the foregoing solutions, in some embodiments, since the battery cell in the foregoing one or more embodiments has high reliability, the electric device including the battery cell in the foregoing one or more embodiments also has high reliability. In some other embodiments, since the battery in the foregoing one or more embodiments has high reliability, the electric device including the battery in the foregoing one or more embodiments also has high reliability.

The foregoing description is merely an overview of the technical solutions of this application. For a better understanding of the technical means in this application such that they can be implemented according to the content of the specification, and to make other objectives, features, and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments, and should not be construed as any limitation on this application. In addition, in all the accompanying drawings, the same reference signs represent the same components. In the accompanying drawings:
FIG. 1 is a schematic structural diagram of a vehicle according to some embodiments of this application;
FIG. 2 is an exploded view of a battery according to some embodiments of this application;
FIG. 3 is an exploded view of a battery cell according to some embodiments of this application;
FIG. 4 is a cross-sectional view of a partial structure of a battery cell according to some embodiments of this application;
FIG. 5 is an exploded view of a battery cell according to some other embodiments of this application;
FIG. 6 is a cross-sectional view of a partial structure of a battery cell according to some other embodiments of this application;
FIG. 7 is a partially enlarged view of position A in FIG. 6;
FIG. 8 is a partially enlarged view of position B in FIG. 6;
FIG. 9 is an axonometric diagram of a first end wall according to some embodiments of this application;
FIG. 10 is a top view of a first end wall according to some other embodiments of this application; and
FIG. 11 is a cross-sectional view of a battery cell according to still some other embodiments of this application.

Reference signs in the specific embodiments are as follows:
1000. vehicle; 200. controller; 300. motor; 100. battery; 11. box; 111. first portion; 112. second portion; 12. battery cell; 121. housing; 1211. first end wall; 12110. central region; 12111. body; 12112. protruding portion; 12112a. first side surface; 12112b. second side surface; 12113. recess; 1200. electrode terminal; 1201. end cover; 1202. shell; 12021. bottom wall; 12001. electrolyte injection hole; 12002. third current collector; 1212. side wall; 122. electrode assembly; 1221. main body; 1222. first tab; 1223. winding center hole; 1224. second tab; 123. pressure relief mechanism; 124. first gap; 125. first current collector; 1251. first through hole; 1252. second through hole; 126. second gap; 127. second current collector; 1271. third through hole; 1272. fourth through hole; 128. first connecting portion; 129. second connecting portion; and 1210. third connecting portion.

### DESCRIPTION OF EMBODIMENTS

The following describes in detail embodiments of technical solutions of this application with reference to the accompanying drawings. The following embodiments are merely used to describe the technical solutions of this application more clearly, and therefore are merely used as examples and do not constitute any limitation on the protection scope of this application.

Unless otherwise defined, all technical and scientific terms used herein shall have the same meanings as commonly understood by persons skilled in the art to which this application belongs. The terms used herein are merely intended to describe the specific embodiments rather than to limit this application. The terms "include", "have", and any other variations thereof in the specification, claims, and brief description of drawings of this application are intended to cover non-exclusive inclusions.

In the description of the embodiments of this application, the technical terms "first", "second", and the like are merely intended to distinguish between different objects, and shall not be understood as any indication or implication of relative importance or any implicit indication of the number, specific sequence, or primarysecondary relationship of the technical features indicated. In the description of the embodiments of this application, "a plurality of" means more than two, unless otherwise specifically defined.

Reference to "embodiment" in this specification means that specific features, structures, or characteristics described with reference to the embodiment may be included in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "height", "length", "width", "thickness", "upper", "lower", "front", "rear", "left", "right", "top", "bottom", "inside", "outside", "axial", "radial", "circumferential", and the like are based on the orientations or positional relationships shown in the accompanying drawings. These terms are merely for ease and brevity of the description of the embodiments of this application rather than indicating or implying that the means or elements mentioned must have specific orientations, or must be constructed or manipulated according to specific orientations, and therefore shall not be construed as any limitations on the embodiments of this application.

In this application, the battery cell may include but is not limited to a lithium-ion secondary battery, a lithium-ion primary battery, a lithium-sulfur battery, a sodium-lithium-ion battery, a sodium-ion battery, a magnesium-ion battery, or the like. Shape of the battery cell may include but is not limited to cylindrical, flat, cuboid, or other shapes. The battery cell, depending on its packaging, may include but is not limited to a cylindrical battery cell, a prismatic battery cell, a pouch battery cell, and a blade battery cell.

In some high-power application scenarios such as an electric vehicle, the application of the battery includes three levels: a battery cell, a battery module, and a battery. The battery module is formed by electrically connecting a specific quantity of battery cells and putting the battery cells into a frame to protect the battery cells from external impact, heat, vibration, and the like. The battery is a final state of a battery system assembled in an electric vehicle. The battery mentioned in the embodiments of this application is a single physical module that includes one or more battery cells for providing higher voltage and capacity. The battery generally includes a box for packaging one or more battery cells. The box can reduce the risk of liquids or other foreign matter affecting charging or discharging of the battery cells.

The following will mainly focus on the cylindrical battery cell. It should be understood that the embodiments described below are also applicable to the cuboid battery cell, pouch battery cell, or blade battery cell in some aspects.

In a typical battery cell structure, the battery cell includes a housing, an electrode assembly, and an electrolyte. The housing includes an end cover and a shell, and the end cover closes the opening of the shell to define an accommodating space for accommodating the electrode assembly.

The electrode assembly is accommodated in the accommodating space, and the electrode assembly includes a positive electrode plate, a negative electrode plate, and a separator. The battery cell mainly relies on migration of metal ions between the positive electrode plate and the negative electrode plate to work. The positive electrode plate includes a positive electrode current collector and a positive electrode active substance layer. The positive electrode active substance layer is applied on a surface of the positive electrode current collector. The part of the positive electrode current collector uncoated with the positive electrode active substance layer protrudes out of the part of the positive electrode current collector coated with the positive electrode active substance layer and serves as a positive tab. A lithium-ion battery is used as an example, for which, the positive electrode current collector may be made of aluminum, and the positive electrode active substance may be lithium cobalt oxide, lithium iron phosphate, ternary lithium, lithium manganate oxide, or the like. The negative electrode plate includes a negative electrode current collector and a negative electrode active substance layer. The negative electrode active substance layer is applied on a surface of the negative electrode current collector. The part of the negative electrode current collector uncoated with the negative electrode active substance layer protrudes out of the part of the negative electrode current collector coated with the negative electrode active substance layer and serves as a negative tab. The negative electrode current collector may be made of copper, and the negative electrode active substance may be carbon, silicon, or the like. To allow a high current to pass through without any fusing, a plurality of positive tabs are provided and stacked together, and a plurality of negative tabs are provided and stacked together. In addition, the manner of forming the electrode assembly may include but is not limited to winding, stacking, or the like. The following will mainly focus on the wound electrode assembly. It should be understood that the embodiments described below are also applicable to the laminated electrode assembly in some aspects.

Tabs are generally electrically connected to a conductive member to lead out electric energy of the electrode assembly. In some cases, the conductive member is a current collector connecting the tabs and the electrode terminals. In some other cases, the conductive member is the electrode terminal.

The electrode terminals generally include a positive electrode terminal and a negative electrode terminal. For the cylindrical battery cell, the electrode terminal is generally disposed on the end cover. In some other cases, the electrode terminal may alternatively be disposed on the shell. A plurality of battery cells are connected in series and/or in parallel through the electrode terminals for various application scenarios.

At least triple protection measures are generally provided for the battery cell. Specifically, the protection measures include at least a switch element, selection of an appropriate separator material, and a pressure relief mechanism.

The pressure relief mechanism is an element or part that is actuated when internal pressure or temperature or another condition of the battery cell reaches a predetermined threshold, so as to release the internal pressure or temperature. Design of the threshold varies with different design requirements. The threshold may depend on the material used for one or more of a positive electrode plate, a negative electrode plate, an electrolyte, and a separator in the battery cell. The pressure relief mechanism may be in a form of an explosion-proof valve, a gas valve, a pressure relief valve, a safety valve, or the like, and may specifically employ an element or part sensitive to pressure or temperature. To be specific, when the internal pressure or temperature or another condition of the battery cell reaches the predetermined threshold, the pressure relief mechanism performs an action or a weak structure provided in the pressure relief mechanism is destroyed, thereby forming an opening or a channel for releasing the internal pressure or temperature. Generally, the weak structure has a lower melting point and/or thickness than other regions of the pressure relief mechanism. For example, the weak structure may be an indentation groove or the like provided on the surface of the pressure relief mechanism.

The action that the pressure relief mechanism is put into may include but is not limited to cracking, breaking, tearing, or opening at least part of the pressure relief mechanism. The opening of the pressure relief mechanism may also be referred to as the pressure relief mechanism being actuated. When the pressure relief mechanism is actuated, high-temperature and high-pressure substances inside the battery cell are discharged as emissions from an actuated site. In this way, the battery cell can release pressure and temperature under controllable pressure or temperature, thereby reducing the probability of more serious potential incidents.

The emissions from the battery cell mentioned in this application include but are not limited to electrolyte, fragments of positive and negative electrode plates and separator because of dissolution or breaking, and high-temperature and high-pressure gases and flames produced by reactions.

The pressure relief mechanism is generally disposed on the end cover. During thermal runaway of the battery cell, the high-temperature and high-pressure emissions are discharged in a direction in which the pressure relief mechanism is disposed on the battery cell, and more specifically, toward a region where the pressure relief mechanism opens. The power and destructive force of such emissions may be very large, and may even be enough to break through one or more structures in that direction. In an embodiment where the weak structure is an indentation groove, the indentation groove cracks to form an opening for the emissions to pass through smoothly during thermal runaway of the battery cell.

For the development of battery technologies, many design factors need to be considered, for example, performance parameters of the battery such as energy density, cycle life, discharge capacity, and charge and discharge rate, as well as reliability of the battery cell.

In a battery cell, to lead out the electric energy of the electrode assembly, the end cover is welded to the periphery of the tab. After the end cover is welded to the periphery of the tab, the accommodating space of the housing is divided into a plurality of independent subspaces, and the pressure relief mechanism disposed on the wall portion of the housing can only correspond to one of the subspaces. During thermal runaway of the battery cell, although the internal pressure or temperature or another condition of the battery cell has reached the predetermined threshold, since the emissions in some of the subspaces cannot promptly flow to the vicinity of the pressure relief mechanism, the pressure relief mechanism cannot promptly open, deteriorating the reliability of the battery cell.

In view of this, this application provides a battery cell. The battery cell includes a housing, a pressure relief mechanism, and an electrode assembly. The housing has a first end wall and a side wall, and the side wall surrounds the first end wall. The first end wall includes a body and a protruding portion, and the protruding portion protrudes from an inner surface of the body. The pressure relief mechanism is disposed on the body. The electrode assembly is accommodated in the housing. The electrode assembly includes a main body and a first tab, and the first tab is disposed on an end of the main body. A first gap is formed between an outer peripheral surface of the main body and an inner surface of the side wall. A first current collector is located between the first end wall and the electrode assembly. The protruding portion is connected to the first current collector. A second gap is formed between the body and the first current collector in a thickness direction of the first end wall. The first gap is in communication with the second gap. With the pressure relief mechanism provided on the body, the pressure relief mechanism can maintain unobstructed communication with the first gap, so that gas inside the battery cell can promptly reach the pressure relief mechanism and be discharged from the pressure relief mechanism during thermal runaway of the battery cell, thereby improving the reliability of the battery cell.

The technical solution described in the embodiments of this application is applicable to battery cells, batteries, and electric devices using a battery.

The electric device includes but is not limited to an electric bicycle, an electric vehicle, a ship, and a spacecraft. For example, the spacecraft includes an airplane, a rocket, a space shuttle, a spaceship, and the like.

For ease of description, the electric device of an embodiment of this application being a vehicle is used as an example for description of the following embodiments.

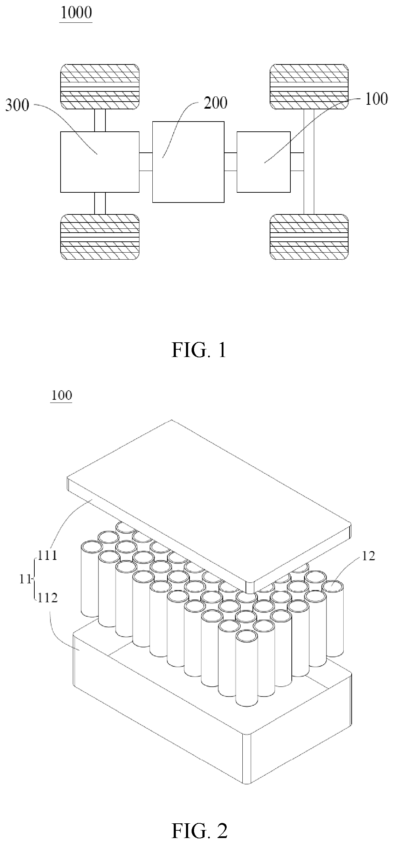

For example, FIG. 1 is a schematic structural diagram of a vehicle 1000 according to some embodiments of this application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. A motor 300, a controller 200, and a battery 100 may be disposed inside the vehicle 1000, where the controller 200 is configured to control the battery 100 to supply power to the motor 300. For example, the battery 100 may be provided at the bottom, front, or rear of the vehicle 1000. The battery 100 may be configured to supply power to the vehicle 1000. For example, the battery 100 may be used as an operational power source for the vehicle 1000 that is configured for a circuit system of the vehicle 1000, for example, to satisfy power needs of start, navigation, and running of the vehicle 1000. In another embodiment of this application, the battery 100 can be used as not only the operational power source for the vehicle 1000, but also as a driving power source for the vehicle 1000, replacing or partially replacing fossil fuel or natural gas to provide driving traction for the vehicle 1000.

To meet different power usage requirements, the battery 100 may include a plurality of battery cells 12, and the plurality of battery cells 12 may be connected in series, parallel, or series-parallel, where being connected in series-parallel means a combination of series and parallel connections. The battery 100 may also be referred to as a battery pack. Optionally, a plurality of battery cells 12 may first be connected in series, parallel, or series-parallel to constitute a battery module, and then a plurality of battery modules are connected in series, parallel, or series-parallel to constitute a battery 100. In other words, the plurality of battery cells 12 may directly constitute the battery 100, or may first constitute the battery modules which then constitute the battery 100.

For example, referring to FIG. 2, FIG. 2 is an exploded view of a battery 100 according to some embodiments of this application. The battery 100 may include a plurality of battery cells 12. The battery 100 may further include a box 11, the inside of the box 11 is a hollow structure, and the plurality of battery cells 12 are accommodated in the box 11. As shown in FIG. 2, the box includes two portions, which are herein referred to as a first portion 111 and a second portion 112 respectively. The first portion 111 and the second portion 112 are snap-fitted together. Shapes of the first portion 111 and the second portion 112 may be determined based on a shape in which the plurality of battery cells 12 are combined, and the first portion 111 and the second portion 112 each may have an opening. For example, the first portion 111 and the second portion 112 each may be a hollow cuboid with only one surface having an opening, the opening of the first portion 111 is disposed opposite the opening of the second portion 112, and the first portion 111 and the second portion 112 are snap-fitted to form a box 11 with an enclosed chamber. The plurality of battery cells 12 are connected in parallel, series, or series-parallel and then placed into the box 11 formed by snap-fitting the first portion 111 and the second portion 112.

Optionally, the battery 100 may further include other structures. Details are not described herein. For example, the battery 100 may further include a busbar that is used to implement electrical connection between the plurality of battery cells 12, for example, in a parallel, series, or series-parallel manner. Specifically, the busbar may implement the electrical connection between the battery cells 12 by connecting electrode terminals 1200 of the battery cells 12. Further, the busbar may be fixed to the electrode terminals 1200 of the battery cells 12 by welding. Electric energy of the plurality of battery cells 12 may be further led out by a conductive mechanism that passes through the box 11.

Based on different power demands, the battery cells 12 can be set in any quantity. The plurality of battery cells 12 may be connected in series, parallel, or series-parallel to achieve greater capacity or power. Because the quantity of battery cells 12 included in each battery 100 may be large, for ease of mounting, the battery cells 12 may be arranged in groups, and each group of battery cells 12 forms a battery module. The quantity of the battery cells 12 included in the battery module is not limited, and may be set according to requirements. The battery 100 may include a plurality of battery modules. These battery modules may be connected in series, parallel, or series-parallel.

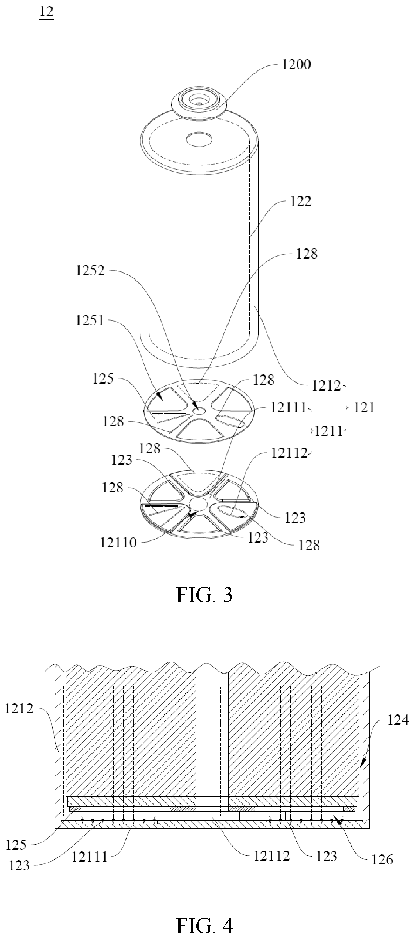

Referring to FIG. 3, FIG. 3 is an exploded view of a battery cell 12 according to some embodiments of this application. The battery cell 12 includes one or more electrode assemblies 122 and a housing 121. The housing 121 may include a shell 1202. A plurality of wall portions of the shell 1202, namely, a plurality of wall portions of the housing 121, enclose a chamber, and the chamber can be used to accommodate the electrode assemblies 122. The shell 1202 is determined based on a shape in which the one or more electrode assemblies 122 are combined. For example, the shell 1202 may be a hollow cylinder, and one surface of the shell 1202 has an opening such that the one or more electrode assemblies 122 can be put into the shell 1202. The shell 1202 is filled with an electrolyte, for example, a liquid electrolyte.

The battery cell 12 may further include an electrode terminal 1200. The electrode terminal 1200 is disposed on the end cover 1201 or on a wall portion of the shell 1202 opposite the end cover 1201. In the battery cell 12, the shell 1202 itself can serve as an output electrode of the battery cell 12. For example, the electrode terminal 1200 is a positive electrode terminal, the positive electrode terminal is electrically connected to the positive tab, the shell 1202 is the negative electrode of the battery cell 12, and the shell 1202 is electrically connected to the negative tab. In some other embodiments, the battery cell 12 may further include two electrode terminals 1200. One electrode terminal 1200 may be disposed on the end cover 1201, and the other electrode terminal 1200 may be disposed on a wall portion of the shell 1202 opposite the end cover 1201. The two electrode terminals 1200 are a positive electrode terminal and a negative electrode terminal respectively. In the battery cell 12, one or more electrode assemblies 122 may be provided based on actual use needs. The battery cell 12 is provided with a plurality of independent electrode assemblies 122 inside.

According to some embodiments of this application, referring to FIGs. 3 and 4, this application provides a battery cell 12. The battery cell 12 includes a housing 121, a pressure relief mechanism 123, and an electrode assembly 122. The housing 121 has a first end wall 1211 and a side wall 1212. The side wall 1212 surrounds the first end wall 1211. The first end wall 1211 includes a body 12111 and a protruding portion 12112, and the protruding portion 12112 protrudes from an inner surface of the body 12111. The pressure relief mechanism 123 is disposed on the body 12111. The electrode assembly 122 is accommodated in the housing 121. The electrode assembly 122 includes a main body 1221 and a first tab 1222. The first tab 1222 is disposed on an end of the main body 1221, and a first gap 124 is formed between an outer peripheral surface of the main body 1221 and an inner surface of the side wall 1212. A first current collector 125 is located between the first end wall 1211 and the electrode assembly 122. The protruding portion 12112 is connected to the first current collector 125, and a second gap 126 is formed between the body 12111 and the first current collector 125 in a thickness direction of the first end wall 1211. The first gap 124 is in communication with the second gap 126.

The housing 121 may include a plurality of wall portions, the plurality of wall portions jointly define an accommodating space, and the electrode assembly 122 is accommodated in the accommodating space. The term "inner" below refers to a side facing toward the accommodating space, and "outer" refers to a side facing away from the accommodating space.

The housing 121 itself can serve as an output electrode of the battery cell 12. For example, in some embodiments, the housing 121 can serve as the negative electrode of the battery cell 12. The material of the housing 121 may include but is not limited to metal. In an embodiment where the housing 121 is metal, the housing 121 may be made of low-carbon steel.

During use of the battery cell 12, the electrode assembly 122 swells and deforms, and gas is generated inside the battery cell 12. To reserve space for swelling and temporary storage of gas, a gap is reserved between the outer peripheral surface of the electrode assembly 122 and the side wall 1212 of the housing 121, that is, the first gap 124. In some embodiments, the electrode assembly 122 is a wound electrode assembly, and the outer surface of the electrode assembly 122 surrounding the winding axis is the outer peripheral surface.

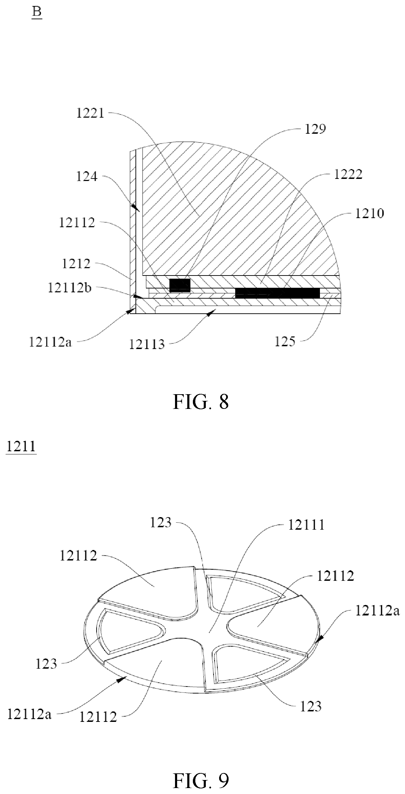

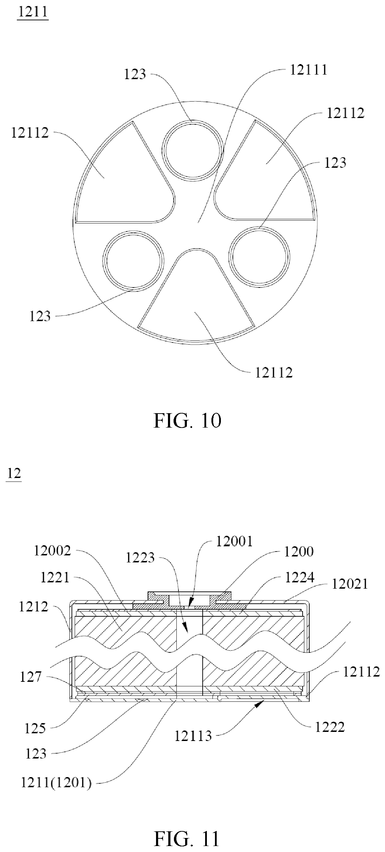

That the pressure relief mechanism 123 opens means that when the internal pressure of the battery cell 12 reaches a preset pressure or temperature or another predetermined threshold, the internal pressure or temperature needs to be released. The shape of the pressure relief mechanism 123 may include but is not limited to circular, elliptical, polygonal, obround, or the like. The shape of the pressure relief mechanism 123 may be a shape with certain symmetry or an asymmetrical shape. The pressure relief mechanism 123 may be a pressure relief indentation. The pressure relief indentation may be a part of the pressure relief mechanism 123 whose thickness and/or melting point is lower than that of other regions of the pressure relief mechanism 123 except the pressure relief indentation, for example, an indentation groove or a pressure relief groove, that is, a groove is opened on the surface of the pressure relief mechanism 123, which reduces the thickness of the position where the pressure relief indentation is provided on the pressure relief mechanism 123. The pressure relief indentation may be formed by machining, etching, stamping, or the like. The pressure relief indentation may be arc-shaped, zigzag-shaped, or the like. The pressure relief indentation may include a plurality of segments of indentations, for example, may include at least one arc segment and at least one straight segment. Referring to FIG. 9, the pressure relief indentation may include two straight segments spaced apart in the circumferential direction of the first end wall 1211. In a direction leaving a center of the first end wall 1211, the width of the two straight segments in the circumferential direction of the first end wall 1211 gradually increases. In the radial direction of the first end wall 1211, end portions of the two straight segments closer to the center of the first end wall 1211 are connected through an arc segment, and end portions of the two straight segments farther away from the center of the first end wall 1211 are connected through the other arc segment. Referring to FIG. 10, in some embodiments, the pressure relief indentation may be a circular indentation.

The pressure relief mechanism 123 may be provided in plurality or one. In some embodiments, one pressure relief mechanism 123 is provided, and the pressure relief mechanism 123 is located at the center of the body 12111.

The electrode assembly 122 includes the main body 1221 and the first tab 1222. The first tab 1222 and the main body 1221 may be made of the same or different materials. The main body 1221 is the part of the positive electrode current collector coated with the positive electrode active substance layer, the separator, and the part of the negative electrode current collector coated with the negative electrode active substance layer. In some embodiments, the first tab 1222 is the part of the positive electrode current collector uncoated with the active substance layer, that is, the positive tab. In some other embodiments, the first tab 1222 may alternatively be the negative tab.

In some embodiments, the electrode assembly 122 is a wound electrode assembly. After winding is completed, there is a gap between two adjacent tabs. To reduce the risk of defects when the first tab 1222 is connected to the first current collector 125, the first tab 1222 can be processed to reduce the gap between the layer structures, facilitating the connection of the first tab 1222 to the current collecting member. For example, the first tab 1222 may be kneaded so that an end portion of the first tab 1222 facing away from the main body 1221 is gathered together. A dense end surface is formed on the end of the first tab 1222 facing away from the main body 1221 by kneading, which reduces the gap between the tabs, facilitating the connection of the first tab 1222 to the current collecting member. Optionally, a conductive material may alternatively be filled between two adjacent tabs, so as to reduce the gap between the tabs. In other words, in normal cases, it can be understood that there is no gap between two adjacent tabs of the same polarity that allows emissions to pass through.

The first current collector 125 being located between the first end wall 1211 and the electrode assembly 122 means that the first current collector 125 is located inside the housing 121. Compared with the case where the first end wall 1211 is directly connected to the first tab 1222, the first end wall 1211 and the first tab 1222 being connected through the first current collector 125 inside the battery cell 12 can reduce the risk of sealing failure of the first end wall 1211 caused by defects such as microcracks at the joint between the first tab 1222 and the first end wall 1211.

The first end wall 1211 includes the body 12111 and the protruding portion 12112. The body 12111 is the part of the first end wall 1211 other than the protruding portion 12112. In the thickness direction of the first end wall 1211, the protruding portion 12112 exceeds the inner surface of the body 12111. The protruding portion 12112 may be connected to the first current collector 125 by welding, conductive fasteners, crimping, or the like. Referring to FIGs. 3 and 4, after the surface of the protruding portion 12112 is connected to the surface of the first current collector 125, since the protruding portion 12112 exceeds the inner surface of the body 12111 in the thickness direction of the first end wall 1211, the second gap 126 is formed between the inner surface of the body 12111 and the first current collector 125.

The first current collector 125 and the first end wall 1211 may be made of the same or different materials. In some embodiments, the first current collector 125 and the first end wall 1211 are made of the same material, that is, steel, such as low-carbon steel.

The first current collector 125 and the first tab 1222 may be made of the same or different materials.

Referring to the dashed arrows in FIG. 4, the emissions may flow from the interlayer gap between the electrode plates of the electrode assembly 122 to the second gap 126, may flow from the first gap 124 to the second gap 126, or may flow from a winding center hole 1223 to the second gap 126. Such design means that the emissions can flow freely within the housing 121, so that the pressure relief mechanism 123 can promptly open during thermal runaway of the battery cell 12.

In the technical solution of the embodiments of this application, with the protruding portion 12112 provided on the first end wall 1211, the second gap 126 in communication with the first gap 124 is formed between the body 12111 of the first end wall 1211 and the first current collector 125. With the pressure relief mechanism 123 provided on the body 12111, the pressure relief mechanism 123 can maintain unobstructed communication with the first gap 124, so that gas inside the battery cell 12 can promptly reach the pressure relief mechanism 123 and be discharged from the pressure relief mechanism 123 during thermal runaway of the battery cell 12, thereby improving the reliability of the battery cell 12.

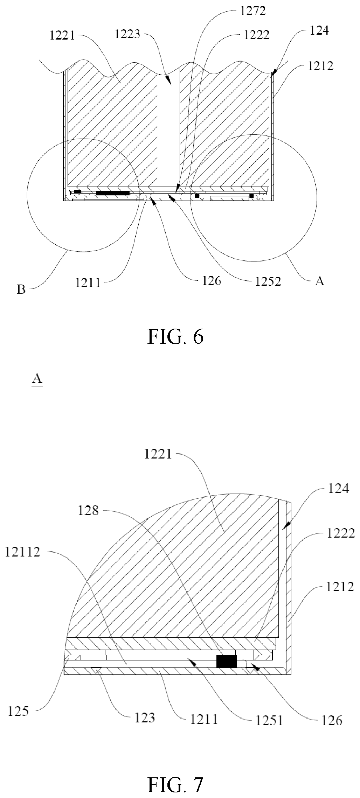

According to some embodiments of this application, referring to FIGs. 3 and 6 to 8, a recess 12113 is formed at a position on an outer surface of the first end wall 1211 corresponding to the protruding portion 12112.

The recess 12113 may be formed by machining, stamping, or the like. In some embodiments, the first end wall 1211 can be stamped so that the first end wall 1211 forms both the protruding portion 12112 and the recess 12113 corresponding to the protruding portion 12112. The protruding portion 12112 and the recess 12113 may be formed by one stamping, with high processing efficiency and low costs.

The energy density of the battery cell 12 refers to the electric energy released by the battery cell 12 per unit volume or mass on average. A greater energy density of the battery cell 12 means more energy is stored per unit volume or weight. For example, under the premise that the total space occupied by the battery cell 12 remains unchanged, a larger internal space of the battery cell 12 for accommodating the electrode assembly 122 means a greater volumetric energy density of the battery cell 12. For example, under the premise that the internal space of the battery cell 12 for accommodating the electrode assembly 122 remains unchanged, a smaller total space occupied by the battery cell 12 means a greater volumetric energy density of the battery cell 12. For example, under the premise that the total mass of the battery cell 12 remains unchanged, a greater mass of the electrode assembly 122 and the electrolyte means a greater mass energy density of the battery cell 12. For example, under the premise that the mass of the electrode assembly 122 and the electrolyte remains unchanged, a smaller total mass of the battery cell 12 means a greater mass energy density of the battery cell 12.

In the embodiments of this application, the protruding portion 12112 is connected to the first current collector 125. Referring to FIG. 3, the protruding portion 12112 (the first end wall 1211) is connected to the first current collector 125 to form a first connecting portion 128. Taking the first connecting portion 128 being formed by welding as an example, after the first connecting portion 128, that is, the weld seam, is formed, the presence of the recess 12113 results in a low risk that the reinforcement of the weld seam exceeds the outer surface of the body 12111 (the outer surface of the first end wall 1211), which enables the battery cell 12 to have a high volumetric energy density.

Since the recess 12113 corresponds to the position of the first end wall 1211 where the protruding portion 12112 is provided, the total mass of the material of the first end wall 1211 is substantially unchanged, which enables the battery cell 12 to have a high mass energy density.

In the foregoing solution, the provision of the recess 12113 corresponding to the protruding portion 12112 substantially does not increase the overall weight of the first end wall 1211, helping the battery cell 12 have a high mass energy density. When the protruding portion 12112 is connected to the first current collector 125 by welding, the provision of the recess 12113 can prevent the weld mark formed by welding from exceeding the outer surface of the first end wall 1211, and thus reduces the height of the battery cell 12 in the thickness direction of the first end wall 1211, increasing the energy density of the battery cell 12.

According to some embodiments of this application, referring to FIGs. 3 and 4, in the thickness direction of the first end wall 1211, a projection of the pressure relief mechanism 123 does not overlap a projection of the protruding portion 12112.

The protruding portion 12112 is connected to the first current collector 125, and in the thickness direction of the first end wall 1211, the projection of the pressure relief mechanism 123 does not overlap the projection of the protruding portion 12112, which means that the pressure relief mechanism 123 is not blocked by the protruding portion 12112.

In the foregoing solution, since the projection of the pressure relief mechanism 123 does not overlap the projection of the protruding portion 12112, the pressure relief mechanism 123 is not blocked by the protruding portion 12112, thereby improving the smoothness of venting.

According to some embodiments of this application, referring to FIGs. 3 and 4, the protruding portion 12112 is provided in plurality, and the plurality of protruding portions 12112 are spaced apart in a circumferential direction of the first end wall 1211.

The protruding portion 12112 being provided in plurality means that, referring to FIG. 3, the first end wall 1211 and the first current collector 125 form the first connecting portion 128 at a plurality of positions, providing more stable connection between the first end wall 1211 and the first current collector 125.

In the foregoing solution, the provision of the plurality of protruding portions 12112 spaced apart in the circumferential direction of the first end wall 1211 can improve the connection stability between the first end wall 1211 and the first current collector 125.

According to some embodiments of this application, referring to FIGs. 3, 4, and 10, the pressure relief mechanism 123 is provided in plurality, and the pressure relief mechanism 123 is provided between every two adjacent protruding portions 12112.

The pressure relief mechanism 123 being provided between every two adjacent protruding portions 12112 means that under the premise that the plurality of protruding portions 12112 are spaced apart in the circumferential direction of the first end wall 1211, the plurality of pressure relief mechanisms 123 are also spaced apart in the circumferential direction of the first end wall 1211, such that the emissions inside the battery cell 12 have a plurality of discharge outlets in the circumferential direction of the first end wall 1211 during thermal runaway of the battery cell 12, which is conducive to improving the pressure relief efficiency of the battery cell 12.

In the foregoing solution, the pressure relief mechanism 123 is provided in plurality, which is conducive to increasing the pressure relief area of the battery cell 12. After the pressure relief mechanisms 123 open, since the pressure relief mechanism 123 is provided between two adjacent protruding portions 12112, most of the opening region of each pressure relief mechanism 123 is in communication with the second gap 126, further improving the pressure relief efficiency of the battery cell 12.

According to some embodiments of this application, referring to FIGs. 3, 5, 9, and 10, the electrode assembly 122 has a winding center hole 1223, where the first end wall 1211 has a central region 12110 corresponding to the winding center hole 1223, the pressure relief mechanism 123 is provided in plurality, and the plurality of pressure relief mechanisms 123 are spaced apart around the central region 12110.

The central region 12110 of the first end wall 1211 corresponds to the winding center hole 1223, and the remaining region of the first end wall 1211 corresponds to the electrode plate region of the electrode assembly 122, where the electrode plate region is the region where the electrode plates are stacked.

In normal cases, gas generated is relatively concentrated in the gap between the electrode plates of the electrode assembly 122. Since the electrode assembly 122 is a wound structure, the position of its winding center hole 1223 generates less gas compared to the remaining positions of the electrode assembly 122. Similarly, during thermal runaway of the battery cell 12, the plurality of pressure relief mechanisms 123 surrounding the central region 12110 means that the distance between the region where the gas is concentrated and the pressure relief mechanisms 123 is short, and the concentrated gas can be promptly discharged from the pressure relief mechanisms 123.

In the foregoing solution, the plurality of pressure relief mechanisms 123 being spaced apart around the central region 12110 means that the pressure relief mechanisms 123 are close to a region of the electrode assembly 122 where gas generated is concentrated, so that the gas can promptly reach the pressure relief mechanisms 123 and be discharged from the pressure relief mechanisms 123 during thermal runaway of the battery cell 12, thereby improving the reliability of the battery cell 12.

According to some embodiments of this application, referring to FIGs. 3, 5, 9, and 10, the plurality of pressure relief mechanisms 123 are distributed in an annular array around a center of the first end wall 1211.

The plurality of pressure relief mechanisms 123 being distributed in an annular array around the center of the first end wall 1211 means that the plurality of pressure relief mechanisms 123 have the same shape and roughly equal difficulty in opening.

In the foregoing solution, the plurality of pressure relief mechanisms 123 have roughly equal difficulty in opening, so that the plurality of pressure relief mechanisms 123 can all promptly open, further improving the pressure relief efficiency of the battery cell 12.

According to some embodiments of this application, referring to FIGs. 3, 5, and 9, in a direction leaving a center of the first end wall 1211, a width of the protruding portion 12112 in a circumferential direction of the first end wall 1211 gradually increases.

After the protruding portion 12112 is connected to the first current collector 125, in the direction leaving the center of the first end wall 1211, the width of the protruding portion 12112 in the circumferential direction of the first end wall 1211 gradually increasing can better disperse stress and make the structural stability of the battery cell 12 higher.

In the foregoing solution, the width of the protruding portion 12112 in the circumferential direction of the first end wall 1211 gradually increasing can enable the battery cell 12 to have high structural stability.

According to some embodiments of this application, referring to FIGs. 3 and 4, the first current collector 125 is provided with a first through hole 1251 running through in a thickness direction of the first current collector 125, the first through hole 1251 being in communication with the second gap 126.

The shape of the first through hole 1251 may include but is not limited to circular, elliptical, polygonal, or the like.

The first through hole 1251 may be formed by machining or the like after the first current collector 125 is processed, or may be formed simultaneously when the first current collector 125 is processed. For example, the first through hole 1251 may be formed simultaneously when the first current collector 125 is processed by casting, 3D printing, or the like.

The first through hole 1251 being in communication with the second gap 126 means that the first through hole 1251 is not blocked by the protruding portion 12112.

In the foregoing solution, the first current collector 125 is provided with the first through hole 1251 in communication with the second gap 126, so that during thermal runaway of the battery cell 12, part of emissions can directly pass through the first through hole 1251 and flow into the second gap 126, and then flow to the pressure relief mechanism 123 more quickly, which can improve the pressure relief efficiency of the battery cell 12. In addition, the provision of the first through hole 1251 is conducive to improving the infiltration performance of the electrode assembly 122.

According to some embodiments of this application, referring to FIGs. 3 and 4, the electrode assembly 122 has a winding center hole 1223, and a position of the first current collector 125 corresponding to the winding center hole 1223 is provided with a second through hole 1252, where the first through hole 1251 is provided in plurality, and the plurality of first through holes 1251 are spaced apart around the second through hole 1252.

Under the premise that the projection of the protruding portion 12112 does not overlap the first through hole 1251, the provision of the plurality of first through holes 1251 can increase channels available for the electrolyte and gas to flow.

In the foregoing solution, the provision of the plurality of first through holes 1251 can further improve the pressure relief efficiency of the battery cell 12 during thermal runaway of the battery cell 12, and can also further improve the infiltration performance of the electrode assembly 122.

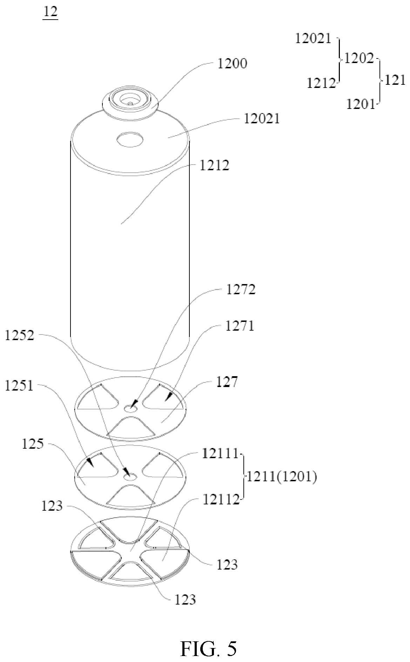

According to some embodiments of this application, referring to FIGs. 5 to 8, the battery cell 12 further includes a second current collector 127, where the second current collector 127 is located between the first current collector 125 and the electrode assembly 122, the first current collector 125 is connected to the first end wall 1211, the second current collector 127 is connected to the first tab 1222, and the first current collector 125 is connected to the second current collector 127. The first current collector 125 and the first end wall 1211 are made of a same material, and the second current collector 127 and the first tab 1222 are made of a same material.

The first current collector 125 and the second current collector 127 may be made of the same or different materials.

The second current collector 127 being located between the first current collector 125 and the electrode assembly 122 means that the second current collector 127 is located on the inner side of the first end wall 1211, and even if defects occur at the connection position between the second current collector 127 and the first current collector 125, the sealing performance of the battery cell 12 is not affected.

In some embodiments, the second current collector 127 and the first tab 1222 are made of the same material, that is, copper.

In some embodiments, the first current collector 125 and the first end wall 1211 are made of the same material, that is, low-carbon steel.

In some embodiments, the second current collector 127 is connected to the first tab 1222 by welding, and the first current collector 125 is connected to the first end wall 1211 by welding. Since the first current collector 125 and the first end wall 1211 are made of a same material, and the second current collector 127 and the first tab 1222 are made of a same material, the risk of welding defects between the first current collector 125 and the first end wall 1211 is low, resulting in high welding yield, and the risk of welding defects between the second current collector 127 and the first tab 1222 is low, resulting in high welding yield.

In the foregoing solution, after the first current collector 125 and the first end wall 1211 made of the same material are connected, their connection position has a low probability of defects, and the battery cell 12 has high sealing performance. After the second current collector 127 and the first tab 1222 made of the same material are connected, their connection position has a low probability of defects, and the current flow is stable.

According to some embodiments of this application, referring to FIGs. 5 to 8, the first current collector 125 is connected to the first end wall 1211 to form a first connecting portion 128, the second current collector 127 is connected to the first tab 1222 to form a second connecting portion 129, and the first current collector 125 is connected to the second current collector 127 to form a third connecting portion 1210. In the thickness direction of the first end wall 1211, a projection of the first connecting portion 128, a projection of the second connecting portion 129, and a projection of the third connecting portion 1210 do not overlap each other.

In some embodiments, the first connecting portion 128, the second connecting portion 129, and the third connecting portion 1210 may be weld seams formed by welding. In some other embodiments, the first connecting portion 128, the second connecting portion 129, and the third connecting portion 1210 may form a physical connection between two corresponding connecting components by applying pressure, and the first connecting portion 128, the second connecting portion 129, and the third connecting portion 1210 are portions where mechanical interlocking is formed between the two corresponding connecting components.

The projections of the first connecting portion 128, the second connecting portion 129, and the third connecting portion 1210 do not overlap each other, which means that when the first connecting portion 128, the second connecting portion 129, and the third connecting portion 1210 are formed, the risk of mutual influence between different connecting portions is low, for example, the risk of overlapping of heataffected zones between different weld seams is low.

In the foregoing solution, since the projections of the first connecting portion 128, the second connecting portion 129, and the third connecting portion 1210 do not overlap each other, when different connecting portions are formed, different connecting portions in the battery cell 12 have a low probability of mutual influence, and the battery cell 12 has high reliability.

According to some embodiments of this application, referring to FIGs. 5 to 8, the first current collector 125 is provided with a first through hole 1251 running through in a thickness direction of the first current collector 125, and the second current collector 127 is provided with a third through hole 1271 running through in a thickness direction of the second current collector 127, both the first through hole 1251 and the third through hole 1271 being in communication with the second gap 126.

The shape of the third through hole 1271 may include but is not limited to circular, elliptical, polygonal, or the like.

The third through hole 1271 may be formed by machining or the like after the second current collector 127 is processed, or may be formed simultaneously when the second current collector 127 is processed. For example, the third through hole 1271 may be formed simultaneously when the second current collector 127 is processed by casting, 3D printing, or the like.

Both the first through hole 1251 and the third through hole 1271 being in communication with the second gap 126 means that the first through hole 1251 and the third through hole 1271 are not blocked by the protruding portion 12112.

In the foregoing solution, the first current collector 125 is provided with the first through hole 1251 in communication with the second gap 126, and the second current collector 127 is provided with the third through hole 1271 in communication with the second gap 126, so that during thermal runaway of the battery cell 12, part of emissions can directly pass through the third through hole 1271 and the first through hole 1251 and flow into the second gap 126, and then flow to the pressure relief mechanism 123 more quickly, which can improve the pressure relief efficiency of the battery cell 12. In addition, the provision of the third through hole 1271 is conducive to improving the infiltration performance of the electrode assembly 122.

According to some embodiments of this application, referring to FIGs. 5 to 8, the electrode assembly 122 has a winding center hole 1223, a position of the first current collector 125 corresponding to the winding center hole 1223 is provided with a second through hole 1252, and a position of the second current collector 127 corresponding to the winding center hole 1223 is provided with a fourth through hole 1272. The first through hole 1251 is provided in plurality, and the plurality of first through holes 1251 are spaced apart around the second through hole 1252. The third through hole 1271 is provided in plurality, and the plurality of third through holes 1271 are spaced apart around the fourth through hole 1272.

Under the premise that the projection of the protruding portion 12112 does not overlap either the first through hole 1251 or the third through hole 1271, the provision of the plurality of third through holes 1271 can increase channels available for the electrolyte and gas to flow.

In the foregoing solution, the provision of the plurality of third through holes 1271 can further improve the pressure relief efficiency of the battery cell 12 during thermal runaway of the battery cell 12, and can also further improve the infiltration performance of the electrode assembly 122.

According to some embodiments of this application, referring to FIGs. 5 to 8, the housing 121 includes an end cover 1201 and a shell 1202, where the shell 1202 has an opening, the end cover 1201 closes the opening, the shell 1202 includes a bottom wall 12021 and a side wall 1212, the side wall 1212 surrounds the bottom wall 12021, and the side wall 1212 connects the bottom wall 12021 and the end cover 1201. The end cover 1201 is the first end wall 1211.

The bottom wall 12021 and the side wall 1212 may be integrally processed and formed or separately processed and formed.

Since the end cover 1201 and the shell 1202 are generally processed separately, the end cover 1201 is generally a plate, and the positioning fixtures required for processing the protruding portion 12112 on the end cover 1201 are relatively simple, resulting in low processing difficulty.

In the foregoing solution, setting the end cover 1201 as the first end wall 1211 can reduce the processing difficulty of the protruding portion 12112.

According to some embodiments of this application, referring to FIGs. 5 to 8, in a radial direction of the first end wall 1211, the protruding portion 12112 abuts against the inner surface of the side wall 1212.

Referring to FIGs. 8 and 9, in the radial direction of the first end wall 1211, the protruding portion 12112 abutting against the inner surface of the side surface means that the position of the first end wall 1211 in its radial direction can be positioned by the protruding portion 12112.

In the foregoing solution, since the protruding portion 12112 abuts against the inner surface of the side wall 1212, the protruding portion 12112 can facilitate the positioning of the end cover 1201 in the radial direction during assembly of the battery cell 12, thereby reducing the assembly difficulty and improving the assembly efficiency.

According to some embodiments of this application, referring to FIGs. 5 to 8, the protruding portion 12112 has a first side surface 12112a abutting against the inner surface of the side wall 1212 and a second side surface 12112b facing toward the first current collector 125, the first side surface 12112a and the second side surface 12112b being connected through a rounded transition.

Referring to FIG. 8, the first side surface 12112a is the peripheral surface of the end cover 1201, and the second side surface 12112b is the upper surface of the end cover 1201.

In the foregoing solution, setting the first side surface 12112a of the protruding portion 12112 abutting against the inner surface of the side wall 1212 as a chamfered surface can enable the protruding portion 12112 to enter the shell 1202 more easily, reducing the assembly difficulty between the end cover 1201 and the shell 1202, and can also reduce the risk of the protruding portion 12112 scratching the inner surface of the shell 1202 during assembly of the end cover 1201, thereby reducing the probability of sealing failure between the end cover 1201 and the shell 1202.

According to some embodiments of this application, referring to FIGs. 5 to 8, the electrode assembly 122 further includes a second tab 1224, where the first tab 1222 and the second tab 1224 are disposed on two opposite ends of the main body 1221 respectively. The battery cell 12 further includes a third current collector 12002 and an electrode terminal 1200, where the electrode terminal 1200 is disposed on the bottom wall 12021, the third current collector 12002 is located between the electrode assembly 122 and the bottom wall 12021, and the third current collector 12002 connects the second tab 1224 and the electrode terminal 1200.

The third current collector 12002 being located between the electrode assembly 122 and the bottom wall 12021 means that the third current collector 12002 is located on the inner side of the bottom wall 12021.

In some embodiments, the second tab 1224 is made of aluminum.

In some embodiments, the electrode terminal 1200 is a positive electrode terminal.

The third current collector 12002 connecting the second tab 1224 and the electrode terminal 1200 can make the electrode terminal 1200 and the third current collector 12002 closely fit, reducing the risk of defects generated when the electrode terminal 1200 is connected to the second tab 1224.

The pressure relief mechanism 123 is disposed on the first end wall 1211, and the electrode terminal 1200 is disposed on the bottom wall 12021, which means that the arrangement position of the pressure relief mechanism 123 does not conflict with the arrangement position of the electrode terminal 1200.

In the foregoing solution, the third current collector 12002 connecting the second tab 1224 and the electrode terminal 1200 can reduce the difficulty of electrical connection between the second tab 1224 and the electrode terminal 1200, so that the battery cell 12 has stable current flow capacity. In addition, the electrode terminal 1200 and the end cover 1201 being disposed on two opposite ends of the main body 1221 respectively can reduce the risk of mutual restriction of the positions of the pressure relief mechanism 123 and the electrode terminal 1200, which is conducive to arranging larger or more pressure relief mechanisms 123, thereby improving the pressure relief efficiency.

According to some embodiments of this application, referring to FIG. 11, the electrode assembly 122 has a winding center hole 1223, and the electrode terminal 1200 is provided with an electrolyte injection hole 12001, the electrolyte injection hole 12001 corresponding to the winding center hole 1223.

The electrolyte can be injected into the battery cell 12 through the electrolyte injection hole 12001.

In the foregoing solution, the electrolyte injection hole 12001 corresponding to the winding center hole 1223 can facilitate the positioning of an electrolyte injection device, improving the electrolyte injection efficiency, and can also improve the uniformity of electrolyte injection and reduce the risk of damages to the electrode assembly 122 caused by the impact of the electrolyte injected into the battery cell 12 on the electrode assembly 122 during electrolyte injection, helping to achieve full infiltration into the electrode assembly 122.

According to some embodiments of this application, this application provides a battery 100, including the battery cell 12 described in any one of the foregoing solutions.

In the foregoing solution, since the battery cell 12 in the foregoing one or more embodiments has high reliability, the battery 100 including the battery cell 12 in the foregoing one or more embodiments also has high reliability.

According to some embodiments of this application, this application provides an electric device. The electric device includes the battery cell 12 described in any one of the foregoing solutions, where the battery cell 12 is configured to provide electric energy; or the electric device includes the battery 100 in the foregoing embodiments, where the battery 100 is configured to provide electric energy.

According to some embodiments of this application, referring to FIGs. 5 to 9 and 11, this application provides a battery cell 12. The battery cell 12 includes a housing 121, a plurality of pressure relief mechanisms 123, an electrode assembly 122, a first current collector 125, a second current collector 127, a third current collector 12002, and an electrode terminal 1200. The electrode assembly 122 is a wound electrode assembly. The housing 121 includes an end cover 1201 and a shell 1202. The shell 1202 has an opening, and the end cover 1201 closes the opening. The shell 1202 includes a bottom wall 12021 and a side wall 1212. The side wall 1212 surrounds the bottom wall 12021, and the side wall 1212 connects the bottom wall 12021 and the end cover 1201. The end cover 1201 includes a body 12111 and a plurality of protruding portions 12112. The protruding portions 12112 protrude from an inner surface of the body 12111, and the plurality of protruding portions 12112 are spaced apart in a circumferential direction of the end cover 1201. In a direction leaving a center of the end cover 1201, a width of the protruding portion 12112 in the circumferential direction of the end cover 1201 gradually increases. The pressure relief mechanism 123 is disposed on the body 12111. The pressure relief mechanism 123 is provided between every two adjacent protruding portions 12112. In a thickness direction of the end cover 1201, a projection of the pressure relief mechanism 123 does not overlap a projection of the protruding portion 12112. The plurality of pressure relief mechanisms 123 are distributed in an annular array around a center of the first end wall 1211. The electrode assembly 122 is accommodated in the housing 121. The electrode assembly 122 includes a main body 1221 and a first tab 1222. The first tab 1222 is disposed on an end of the main body 1221. A first gap 124 is formed between an outer peripheral surface of the main body 1221 and an inner surface of the side wall 1212. The first current collector 125 is located between the end cover 1201 and the electrode assembly 122. The plurality of protruding portions 12112 are all connected to the first current collector 125. A second gap 126 is formed between the body 12111 and the first current collector 125 in the thickness direction of the end cover 1201. The first gap 124 is in communication with the second gap 126. A recess 12113 is formed by stamping at a position on an outer surface of the end cover 1201 corresponding to the protruding portion 12112. The second current collector 127 is located between the first current collector 125 and the electrode assembly 122. The first current collector 125 is connected to the end cover 1201. The second current collector 127 is connected to the first tab 1222. The first current collector 125 is connected to the second current collector 127. The first current collector 125 and the end cover 1201 are made of a same material, and the second current collector 127 and the first tab 1222 are made of a same material. The electrode assembly 122 has a winding center hole 1223, the electrode terminal 1200 is provided with an electrolyte injection hole 12001, and the electrolyte injection hole 12001 corresponds to the winding center hole 1223. The first current collector 125 is provided with a first through hole 1251. The second current collector 127 is provided with a third through hole 1271. Both the first through hole 1251 and the third through hole 1271 are in communication with the second gap 126. A position of the first current collector 125 corresponding to the winding center hole 1223 is provided with a second through hole 1252, and a position of the second current collector 127 corresponding to the winding center hole 1223 is provided with a fourth through hole 1272. The first through hole 1251 is provided in plurality, and the plurality of first through holes 1251 are spaced apart around the second through hole 1252. The third through hole 1271 is provided in plurality, and the plurality of third through holes 1271 are spaced apart around the fourth through hole 1272. In a radial direction of the end cover 1201, the protruding portion 12112 abuts against the inner surface of the side wall 1212. The protruding portion 12112 has a first side surface 12112a abutting against the inner surface of the side wall 1212 and a second side surface 12112b facing toward the first current collector 125. The first side surface 12112a and the second side surface 12112b are connected through a rounded transition. The electrode assembly 122 further includes a second tab 1224. The first tab 1222 and the second tab 1224 are disposed on two opposite ends of the main body 1221 respectively. The battery cell 12 further includes a third current collector 12002 and an electrode terminal 1200. The electrode terminal 1200 is disposed on the bottom wall 12021. The third current collector 12002 is located between the electrode assembly 122 and the bottom wall 12021. The third current collector 12002 connects the second tab 1224 and the electrode terminal 1200. The protruding portion 12112 is disposed on the first end wall 1211, such that the second gap 126 in communication with the first gap 124 is formed between the body 12111 of the first end wall 1211 and the first current collector 125. With the pressure relief mechanism 123 provided on the body 12111, the pressure relief mechanism 123 can maintain unobstructed communication with the first gap 124, so that gas inside the battery cell 12 can promptly reach the pressure relief mechanism 123 and be discharged from the pressure relief mechanism 123 during thermal runaway of the battery cell 12, thereby improving the reliability of the battery cell 12. The protruding portion 12112 can be used to form the second gap 126 with the first current collector 125, and also position the end cover 1201 with the shell 1202.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the foregoing embodiments or make equivalent replacements to some or all technical features thereof without departing from the scope of the technical solutions in the embodiments of this application. All such modifications and equivalent replacements shall fall within the scope of the claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery cell, **characterized by** comprising:
a housing having a first end wall and a side wall, wherein the side wall surrounds the first end wall, and the first end wall comprises a body and a protruding portion, the protruding portion protruding from an inner surface of the body;
a pressure relief mechanism disposed on the body;
an electrode assembly accommodated in the housing, wherein the electrode assembly comprises a main body and a first tab, the first tab being disposed on an end of the main body, and a first gap being formed between an outer peripheral surface of the main body and an inner surface of the side wall; and
a first current collector located between the first end wall and the electrode assembly, wherein the protruding portion is connected to the first current collector, and a second gap is formed between the body and the first current collector in a thickness direction of the first end wall, the first gap being in communication with the second gap.

2. The battery cell according to claim 1, **characterized in that** a recess is formed at a position on an outer surface of the first end wall corresponding to the protruding portion.

3. The battery cell according to claim 1 or 2, **characterized in that** in the thickness direction of the first end wall, a projection of the pressure relief mechanism does not overlap a projection of the protruding portion.

4. The battery cell according to any one of claims 1 to 3, **characterized in that** the protruding portion is provided in plurality, and the plurality of protruding portions are spaced apart in a circumferential direction of the first end wall.

5. The battery cell according to claim 4, **characterized in that** the pressure relief mechanism is provided in plurality, and the pressure relief mechanism is provided between every two adjacent protruding portions.

6. The battery cell according to any one of claims 1 to 5, **characterized in that** the electrode assembly has a winding center hole, wherein the first end wall has a central region corresponding to the winding center hole, the pressure relief mechanism is provided in plurality, and the plurality of pressure relief mechanisms are spaced apart around the central region.

7. The battery cell according to claim 6, **characterized in that** the plurality of pressure relief mechanisms are distributed in an annular array around a center of the first end wall.

8. The battery cell according to any one of claims 1 to 7, **characterized in that** in a direction leaving a center of the first end wall, a width of the protruding portion in a circumferential direction of the first end wall gradually increases.

9. The battery cell according to any one of claims 1 to 8, **characterized in that** the first current collector is provided with a first through hole running through in a thickness direction of the first current collector, the first through hole being in communication with the second gap.

10. The battery cell according to claim 9, **characterized in that** the electrode assembly has a winding center hole, and a position of the first current collector corresponding to the winding center hole is provided with a second through hole, wherein the first through hole is provided in plurality, and the plurality of first through holes are spaced apart around the second through hole.

11. The battery cell according to any one of claims 1 to 10, **characterized in that** the battery cell further comprises a second current collector, wherein the second current collector is located between the first current collector and the electrode assembly, the first current collector is connected to the first end wall, the second current collector is connected to the first tab, and the first current collector is connected to the second current collector; wherein
the first current collector and the first end wall are made of a same material, and the second current collector and the first tab are made of a same material.

12. The battery cell according to claim 11, **characterized in that** the first current collector is connected to the first end wall to form a first connecting portion, the second current collector is connected to the first tab to form a second connecting portion, and the first current collector is connected to the second current collector to form a third connecting portion, wherein in the thickness direction of the first end wall, a projection of the first connecting portion, a projection of the second connecting portion, and a projection of the third connecting portion do not overlap each other.

13. The battery cell according to claim 12, **characterized in that** the first current collector is provided with a first through hole running through in a thickness direction of the first current collector, and the second current collector is provided with a third through hole running through in a thickness direction of the second current collector, both the first through hole and the third through hole being in communication with the second gap.

14. The battery cell according to claim 13, **characterized in that** the electrode assembly has a winding center hole, a position of the first current collector corresponding to the winding center hole is provided with a second through hole, and a position of the second current collector corresponding to the winding center hole is provided with a fourth through hole, wherein the first through hole is provided in plurality, and the plurality of first through holes are spaced apart around the second through hole; and
the third through hole is provided in plurality, and the plurality of third through holes are spaced apart around the fourth through hole.

15. The battery cell according to any one of claims 1 to 14, **characterized in that** the housing comprises an end cover and a shell, wherein the shell has an opening, the end cover closes the opening, the shell comprises a bottom wall and the side wall, the side wall surrounds the bottom wall, and the side wall connects the bottom wall and the end cover;
wherein the end cover is the first end wall.

16. The battery cell according to claim 15, **characterized in that** in a radial direction of the first end wall, the protruding portion abuts against the inner surface of the side wall.

17. The battery cell according to claim 16, **characterized in that** the protruding portion has a first side surface abutting against the inner surface of the side wall and a second side surface facing toward the first current collector, the first side surface and the second side surface being connected through a rounded transition.

18. The battery cell according to claim 16 or 17, **characterized in that** the electrode assembly further comprises a second tab, wherein the first tab and the second tab are disposed on two opposite ends of the main body respectively; and
the battery cell further comprises a third current collector and an electrode terminal, wherein the electrode terminal is disposed on the bottom wall, the third current collector is located between the electrode assembly and the bottom wall, and the third current collector connects the second tab and the electrode terminal.

19. The battery cell according to claim 18, **characterized in that** the electrode assembly has a winding center hole, and the electrode terminal is provided with an electrolyte injection hole, the electrolyte injection hole corresponding to the winding center hole.

20. A battery, **characterized by** comprising the battery cell according to any one of claims 1 to 19.

21. An electric device, **characterized in that** the electric device comprises the battery cell according to any one of claims 1 to 19, wherein the battery cell is configured to provide electric energy; or
the electric device comprises the battery according to claim 20, wherein the battery is configured to provide electric energy.
